# EUROPÄISCHE PATENTANMELDUNG

(11) **EP 1 946 962 A2**
(43) Veröffentlichungstag der Anmeldung: **23.07.2008**
(21) Anmeldenummer: 08150354.2
(22) Anmeldetag: 17.01.2008
(51) Int. Cl.: B60N 2/64, B60N 2/68

(54) **Sitzstruktur für einen Fahrzeugsitz**

(30) Priorität: 18.01.2007 EP 07100776
(71) Anmelder: BASF SE, 67056 Ludwigshafen (DE)
(72) Erfinder: Petry, Markus, 67259, Großniedesheim (DE)
(74) Vertreter: Huhn, Michael

(57) **Zusammenfassung**

Die Erfindung betrifft eine Sitzstruktur für einen Fahrzeugsitz (1) aus einem Kunststoff, eine Rückenlehne (5) und eine Sitzfläche (7) umfassend, die einteilig miteinander verbunden sind, wobei bei der Sitzstruktur (3) entlang der Rückenlehne (5) und der Sitzfläche (7) mindestens ein Hohlprofil (9) ausgebildet ist. Das Hohlprofil (9) wird durch ein kombiniertes Gasinnendruck- und Wasserinjektionsverfahren hergestellt. Die Erfindung betrifft weiterhin ein Verfahren zur Herstellung der Sitzstruktur (3), bei welchem in einem ersten Schritt die Sitzstruktur (3) mit einer Kunststoffschmelze spritzgegossen wird, in einem zweiten Schritt ein Gas unter Druck zur Ausformung des Hohlprofils (9) eingedüst wird und in einem dritten Schritt eine Flüssigkeit unter Druck in das im zweiten Schritt (b) ausgeformte Hohlprofil (9) eingedüst wird.

## Beschreibung

Die Erfindung betrifft eine Sitzstruktur für einen Fahrzeugsitz aus einem Kunststoff, eine Rückenlehne und einen Sitz umfassend, die einteilig miteinander verbunden sind, wobei bei der Sitzstruktur entlang der Rückenlehne und des Sitzes mindestens ein Hohlprofil ausgebildet ist.

Fahrzeugsitze aus Kunststoff werden derzeit zum Beispiel für Personenbeförderungsfahrzeuge, beispielsweise im öffentlichen Nahverkehr, eingesetzt. Derartige Fahrzeugsitze sind zum Beispiel einteilig, eine Rückenlehne und einen Sitz umfassend, als Kunststoffspritzteil hergestellt. Zur Stabilisierung ist es zum Beispiel aus DE-A 198 39 325 bekannt, an den Längsseiten der Rückenlehne jeweils mindestens einen sich in Längsrichtung erstreckenden rohrförmigen Hohlraum auszubilden. Der Hohlraum wird zum Beispiel durch Gasinnendrucktechnik hergestellt.

Zur Verstärkung von einteilig ausgebildeten Sitzen in Kraftfahrzeugen ist es zum Beispiel auch bekannt, an der Schalenfläche des Fahrzeugsitzes eine Randverstärkung vorzusehen und zusätzlich senkrecht oder winklig zur Schalenfläche verlaufende, angespritzte, angeklebte oder angeschweißte Stege vorzusehen. Die Randverstärkung erfolgt üblicherweise mit einer Randabkantung. Aus DE-A 31 00 706 ist es bekannt, die Randabkantung und die Stege gänzlich oder über wesentliche Teile ihrer Länge zu einem Hohlprofil abzudecken.

Die Befestigung der aus dem Stand der Technik bekannten Sitze im Kraftfahrzeug erfolgt im Allgemeinen auf einem Untergestell. Üblicherweise wird der Sitz mit dem Untergestell verschraubt, vernietet oder anderweitig verbunden. Eine Sitzverstellung ist hierdurch nicht möglich.

Ein weiterer Nachteil der aus dem Stand der Technik bekannten Fahrzeugsitze ist, dass diese nur in Kraftfahrzeugen zum öffentlichen Personennahverkehr eingesetzt werden können. Ein Einsatz in Personenkraftfahrzeugen, insbesondere als Fahrer- oder Beifahrersitz, ist wegen der mangelnden Steifigkeit und Festigkeit des Sitzes sowie der fehlenden Einstellmöglichkeit der Sitzposition nicht möglich.

Aufgabe der vorliegenden Erfindung ist es, einen Fahrzeugsitz bereitzustellen, der sich auf einfache Weise herstellen lässt und in Personenkraftfahrzeugen eingesetzt werden kann.

Gelöst wird die Aufgabe durch eine Sitzstruktur für einen Fahrzeugsitz aus einem Kunststoff, eine Rückenlehne und eine Sitzfläche umfassend, die einteilig miteinander verbunden sind, wobei bei der Sitzstruktur entlang der Rückenlehne und der Sitzfläche mindestens ein Hohlprofil ausgebildet ist. Das Hohlprofil wird erfindungsgemäß durch ein kombiniertes Gasinnendruck- und Wasserinjektionsverfahren hergestellt.

Vorteil der erfindungsgemäß ausgebildeten Sitzstruktur, bei der die Hohlräume durch ein kombiniertes Gasinnendruck- und Wasserinjektionsverfahren hergestellt werden, ist, dass sich hierdurch im Bereich des Hohlprofiles höhere Wandstärken und gleichmäßigere Wanddickenverteilungen einstellen lassen als mit einem Gasinnendruckverfahren, wie dieses aus dem Stand der Technik bekannt ist. Zudem lassen sich durch die Kombination von Gasinnendrucktechnik und Wasserinjektionsverfahren größere Außenabmessungen erzeugen, da durch das Wasserinjektionsverfahren eine schnellere Abkühlung der Kunststoffformmasse, aus welcher die Sitzstruktur gefertigt wird, erzielt wird.

In einer bevorzugten Ausführungsform ist an der Rückenlehne eine Kopfstütze ausgebildet. Hierzu ist die Rückenlehne derart geformt, dass die Kopfstütze einteilig einen Teil der Rückenlehne ausbildet. Dies ermöglicht eine kostengünstige Gestaltung der Kopfstütze, ohne dass zusätzliche Aufnahmevorrichtungen an der Rückenlehne ausgebildet werden müssen, an denen die Kopfstütze befestigt wird.

In einer bevorzugten Ausführungsform sind an der Sitzstruktur Befestigungsvorrichtungen vorgesehen, an denen jeweils ein Sitzpolster, ein Rückenpolster und ein Kopfstützenkissen befestigt werden können. Vorzugsweise werden Befestigungsvorrichtungen ausgewählt, die einen einfachen Austausch von Sitzpolster, Rückenpolster und Kopfstützenkissen erlauben. So eignen sich als Befestigungsvorrichtungen zum Beispiel Druckknöpfe oder Haken, die in Ösen im Sitzpolster, Rückenpolster oder Kopfstützenkissen eingreifen. Weitere geeignete Befestigungsvorrichtungen sind zum Beispiel Knöpfe, Schrauben, Nieten oder ein Verkleben der Polster mit der Sitzstruktur.

Vorzugsweise sind das Sitzpolster, das Rückenpolster und das Kopfstützenkissen so geformt, dass sich die Sitzposition durch den Austausch der Polster einstellen lässt. So ist es zum Beispiel bevorzugt, die Sitzhöhe durch Verwendung unterschiedlich dicker Sitzpolster einzustellen. Die Sitztiefe kann zum Beispiel durch Verwendung unterschiedlich dicker Rückenpolster eingestellt werden. Weiterhin ist es zum Beispiel auch möglich, keilförmige Rückenpolster zu verwenden, um die Sitzneigung einstellen zu können. Dadurch ist eine Anpassung an unterschiedliche Personen sowie unterschiedliche Fahrzeuggeometrien möglich.

Zur Einstellung des Sitzabstandes ist vorzugsweise eine karosseriefeste Bodenschiene vorgesehen. Die Bodenschiene enthält Aufnahmevorrichtungen, in welche die Sitzstruktur aufgenommen werden kann. Hierzu sind vorzugsweise an der Sitzstruktur Stifte ausgebildet, welche formschlüssig von den Aufnahmevorrichtungen in der Bodenschiene aufgenommen werden. Die Einstellung des Sitzabstandes erfolgt durch ein einfaches Umstecken des Sitzes in andere Aufnahmevorrichtungen in der Bodenschiene. Durch zusätzlichen Kraftschluss wird der Sitz gegen ein Herausrutschen aus der Aufnahmevorrichtung in der Bodenschiene, zum Beispiel aufgrund von Vibrationen während des Betriebs des Kraftfahrzeuges, gesichert.

Die Hohlprofile zur Erhöhung der Stabilität des Fahrzeugsitzes sind vorzugsweise jeweils an der Seite der Sitzstruktur entlang ausgebildet. Durch die Ausbildung des Hohlprofils an der Seite des Sitzes ist eine ergonomische Gestaltung möglich, ohne dass durch das Hohlprofil der Komfort des Passagiers beeinträchtigt wird. Zudem lässt sich durch die Anordnung der Hohlprofile an den Seiten der Sitzstruktur eine bessere Stabilität erzielen als bei der Anordnung des Hohlprofils an einer beliebigen anderen Position am Sitz.

Der Kunststoff, aus dem die Sitzstruktur gefertigt ist, ist vorzugsweise ein Thermoplast, der einen Elastizitätsmodul nach ISO 527 von 5000 MPa bis 25000 MPa, vorzugsweise von 10000 MPa bis 18000 MPa, aufweist. Der Elastizitätsmodul sollte möglichst im gesamten im Kraftfahrzeug auftretenden Temperaturbereich, d. h. etwa von -40 °C bis + 80 °C, in dem angegebenen Bereich bleiben. Die Bruchdehnung des eingesetzten Kunststoffmaterials liegt dabei vorzugsweise bei mindestens 1,5 %, bevorzugt bei mindestens 3 %.

Als Kunststoff für die Sitzstruktur eignen sich zum Beispiel Polyamid, Polypropylen, Polyethylen, Styrolcopolymere, Polycarbonat, Polyester, Polyacetal oder Polyurethan oder Blends dieser Polymere mit und ohne Füllstoffe. Bevorzugt sind Polyamide, besonders bevorzugt sind Polyamid 66 und Polyamid 6. Ganz besonders bevorzugt ist Polyamid 6.

Zur Erhöhung der Stabilität ist es weiterhin bevorzugt, dass der Kunststoff faserverstärkt ist. Als Fasern werden vorzugsweise Kurzglasfasern eingesetzt. Der Anteil der Fasern im Kunststoff liegt vorzugsweise bei mehr als 40 %, besonders bevorzugt bei mehr als 50 %. Es ist jedoch auch möglich, einen Kunststoff einzusetzen, der einen geringeren Anteil an Fasern oder sogar gar keine Fasern enthält.

Bevorzugt ist jedoch der Einsatz eines faserverstärkten technischen Kunststoffes. Hierdurch wird eine sehr dünne Bauweise des Sitzes ermöglicht. Bei entsprechender Auswahl des Kunststoffes ist zudem keine weitere Abdeckung der sichtbaren Bereiche notwendig, da der Kunststoffbereich den ästhetischen Anforderungen an eine Oberfläche genügt.

Um den Komfortanforderungen an ein Sitzpolster und ein Rückenpolster zu genügen, sind diese vorzugsweise aus einem Weichschaum ausgebildet. Als Weichschaum eignen sich alle, dem Fachmann bekannten Schäume, die üblicherweise zur Herstellung von Polstern eingesetzt werden. Das Sitzpolster und das Rückenpolster sind im Allgemeinen in herkömmlicher Art und Weise hergestellt unter Verwendung von Schaumformulierungen, die in der Technik gut bekannt sind. Besonders bevorzugte Schäume sind Polyurethanschäume. Beispielhafte Polyurethanformulierungen, die in der Praxis der vorliegenden Erfindung nützlich sind, sind den Fachleuten bekannt. Diese sind zum Beispiel in Flexible Polyurethane Foams von Harrington & Hock, Kapitel 11, veröffentlicht durch Dow Chemical Company (1997) beschrieben.

Die Kopfstütze des Fahrzeugsitzes ist aus der Sitzstruktur und dem Kopfstützenkissen gebildet, welches an der Sitzstruktur befestigt wird. Um den Anforderungen an eine Kopfstütze zu genügen, sind Teile des Kopfstützenkissens vorzugsweise aus einem energieabsorbierenden Schaum gefertigt. Ein geeigneter energieabsorbierender Schaum ist zum Beispiel EPP (expandiertes Polypropylen). Durch die energieabsorbierenden Eigenschaften des Schaumes ist es möglich, die Kopfstütze dadurch auszubilden, dass das Kopfstützenkissen direkt auf die steife Längenstruktur aufgebracht wird.

Die erfindungsgemäß ausgebildete Sitzstruktur weist vorzugsweise eine Wandstärke im Bereich von 1 bis 10 mm und, besonders bevorzugt im Bereich von 2 bis 4 mm, auf. Das Hohlprofil ist vorzugsweise beidseitig außen an der Sitzstruktur angeordnet. In einer bevorzugten Ausführungsform ist das Hohlprofil entlang der gesamten Sitzlänge durchgängig. Um die Stabilität des Sitzes zu erhöhen, ist es möglich, das Hohlprofil im Bereich des Übergangs von der Rückenlehne zum Sitz mit einem größeren Außendurchmesser zu versehen. In einer weiteren Ausführungsform erstreckt sich das Hohlprofil auch entlang dem Bereich der Kopfstütze, um diesen ebenfalls zu versteifen.

Der Querschnitt des Hohlprofils kann jede beliebige Form aufnehmen. Bevorzugt ist der Querschnitt des Profils rund, oval, dreieckförmig oder viereckförmig. Besonders bevorzugt ist der Querschnitt des Hohlprofils annähernd dreieckig. Hierdurch wird der Komfort des Passagiers möglichst wenig beeinflusst, da das Profil nicht in die Sitzebene hervorsteht. Bei einem dreieckförmigen oder viereckförmigen Hohlprofil liegt die Außenabmessung vorzugsweise bei einer Seitenlänge im Bereich von 30 bis 80 mm. Bei einem runden oder ovalen Hohlprofil liegt der Außendurchmesser vorzugsweise im Bereich von 30 bis 80 mm. Die Wandstärke des Hohlprofils liegt vorzugsweise im Bereich zwischen 3 und 10 mm, besonders bevorzugt im Bereich zwischen 5 und 7 mm.

Die Erfindung betrifft weiterhin ein Verfahren zur Herstellung einer Sitzstruktur, welches folgende Schritte umfasst:
a) Spritzgießen der Sitzstruktur mit einer Kunststoffschmelze,
b) Eindüsen eines Gases unter Druck zur Ausformung des Hohlprofils,
c) Einspritzen einer Flüssigkeit unter Druck in das in Schritt b) ausgeformte Hohlprofil.

Durch das Eindüsen des Gases unter Druck wird die Kunststoffschmelze gegen die Formwandung gedrückt. Hierdurch bildet sich ein Hohlprofil aus. Zur Erzielung einer gleichmäßigen Wandstärke und um höhere Wandstärken erzeugen zu können, wird nach dem Eindüsen des Gases eine Flüssigkeit durch das Hohlprofil gespritzt. Durch das Einspritzen der Flüssigkeit wird im Bereich des Hohlprofils die Seele aus Polymerschmelze verdrängt. Durch eine gezielte Temperierung der Flüssigkeit kann erzielt werden, dass sich die Kunststoffschmelze zu einer Polymerhaut verfestigt und somit die dahinterliegende Polymerschmelze in Form eines höher viskosen, fließenden Kerns verdrängt. Die Herstellung von Hohlräumen durch das Injizieren von Wasser ist dem Fachmann bekannt und zum Beispiel in DE-A 199 03 682 beschrieben.

Die Flüssigkeit, die in Schritt c) eingesetzt wird, ist vorzugsweise Wasser.

Die erfindungsgemäß hergestellte Sitzstruktur wird vorzugsweise in einem Kraftfahrzeug, insbesondere als Fahrersitz oder Beifahrersitz in einem Personenkraftwagen, eingesetzt.

Im Folgenden wird die Erfindung anhand von Zeichnungen näher beschrieben. Darin zeigen:
- Figur 1: einen erfindungsgemäß ausgebildeten Fahrzeugsitz,
- Figur 2: einen erfindungsgemäß ausgebildeten Fahrzeugsitz ohne Polster,
- Figur 3: einen Schnitt durch die Rückenlehne,
- Figur 4: einen Schnitt durch die Sitzfläche,
- Figur 5: einen erfindungsgemäß ausgebildeten Fahrersitz in zwei unterschiedlichen Positionen.

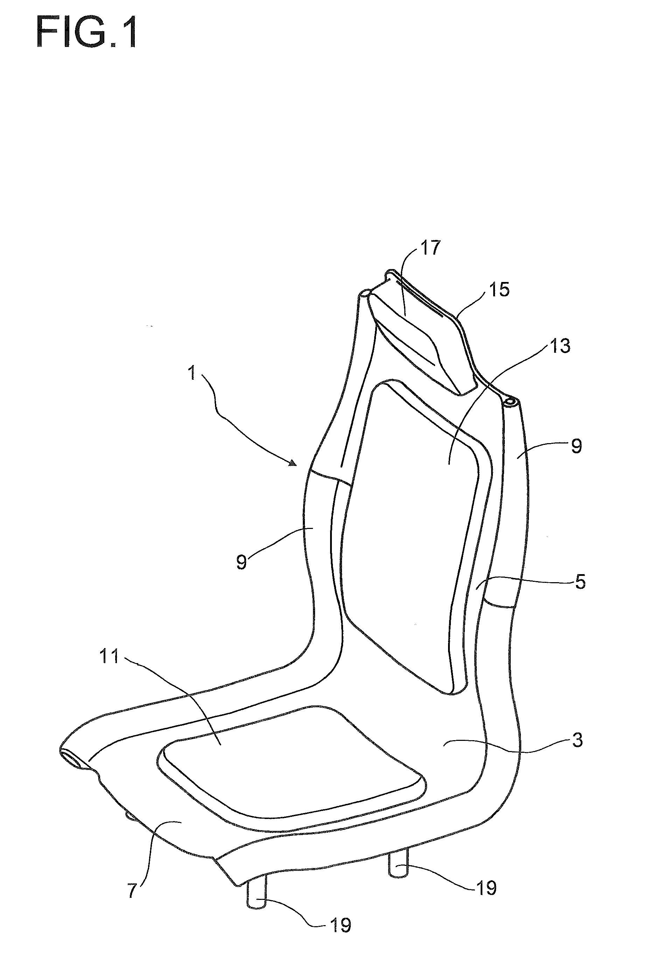

In Figur 1 ist ein erfindungsgemäß ausgebildeter Fahrzeugsitz dargestellt.

Ein Fahrzeugsitz 1 umfasst eine Sitzstruktur 3, die aus einem Kunststoff gefertigt ist. Die Sitzstruktur 3 umfasst eine Rückenlehne 5 und eine Sitzfläche 7, wobei Rückenlehne 5 und Sitzfläche 7 einteilig ausgebildet sind und die Sitzstruktur 3 formen. Als Kunststoff für die Sitzstruktur eignen sich, wie oben bereits erwähnt, zum Beispiel Polyamid, Polycarbonat oder Polybutylenterephthalat. Vorzugsweise ist der Kunststoff mit Glasfasern verstärkt, wobei der Faseranteil vorzugsweise größer 40, besonders bevorzugt größer 50 %, ist.

Um die notwendige Stabilität der Sitzstruktur 3 zu erzielen, ist diese in der in Figur 1 dargestellten Ausführungsform an ihren Randbereichen mit einem Hohlprofil 9 ausgeführt. Das Hohlprofil 9 kann dabei jeden beliebigen, dem Fachmann bekannten Querschnitt einnehmen. So kann das Hohlprofil zum Beispiel mit einem runden, einem ovalen, einem rechteckförmigen oder einem dreieckförmigen Querschnitt ausgebildet sein. Auch ist jede andere geometrische Form für den Querschnitt denkbar. In der hier dargestellten Ausführungsform ist der Querschnitt des Hohlprofils 9 rund. Neben dem runden Querschnitt ist es aus Komfortgründen jedoch auch bevorzugt, wenn das Hohlprofil 9 einen dreieckförmigen Querschnitt aufweist.

Die Hohlprofile 9 werden erfindungsgemäß durch eine kombinierte Gasinnendrucktechnik und Wasserinjektionstechnik hergestellt. Hierbei wird zunächst beim Herstellungsprozess der Sitzstruktur 3 die noch nicht ausgehärtete Kunststoffschmelze in der Form durch unter Druck stehendes Gas verdrängt. Hierdurch wird das Hohlprofil erzeugt. In einem nächsten Schritt wird eine Flüssigkeit, vorzugsweise Wasser in das Hohlprofil eingespritzt. Durch die gewünschte Temperierung der Flüssigkeit ist eine schnelle Abkühlung des Kunststoffes möglich. Hierdurch lassen sich größere Wandstärken realisieren, als dies zum Beispiel möglich ist, wenn die Hohlprofile 9 nur durch Gasinnendrucktechnik hergestellt werden.

Um den Komfortanforderungen für einen Passagier zu genügen, ist auf der Sitzfläche 7 ein Sitzpolster 11 und an der Rückenlehne 5 ein Rückenpolster 13 befestigt. Die Befestigung von Sitzpolster 11 und Rückenpolster 13 erfolgt vorzugsweise durch eine lösbare Verbindung, um das Sitzpolster 11 bzw. Rückenpolster 13 auf einfache Weise austauschen zu können und so in Abhängigkeit der Ergonomie des Passagiers unterschiedliche Polster verwenden zu können. So lässt sich zum Beispiel auf einfache Weise durch Austauschen von Sitzpolster 11 oder Rückenpolster 13 die Sitzposition einstellen. Ein höheres Sitzpolster 11 führt zum Beispiel zu einer höheren Sitzposition des Passagiers. Mit einem dickeren Rückenpolster 13 lässt sich zum Beispiel die Sitzfläche verkürzen. Auch lässt sich die Lehnenneigung durch die Form des Rückenpolsters 13 variieren.

Um den Sicherheitsanforderungen an einen Fahrzeugsitz, wie er zum Beispiel in einem Personenkraftfahrzeug eingesetzt wird, zu genügen, ist an der Sitzstruktur 3 eine Kopfstütze 15 ausgeformt. Die Kopfstütze 15 ist dabei einteilig mit der Rückenlehne 5 verbunden. Auf diese Weise lässt sich auf einfache Weise die komplette Sitzstruktur 3 mitsamt der Kopfstütze 15 herstellen. Es ist nicht erforderlich, zusätzliche Aufnahmevorrichtungen für eine Kopfstütze 15 vorzusehen. Um die Stabilität der Kopfstütze 15 zu erhöhen, ist es möglich, anders als in Figur 1 dargestellt, die Hohlprofile 19 entlang der Oberseite der Rückenlehne 5 und der Kopfstütze 15 zu verlängern. Auf diese Weise wird die Kopfstütze 15 durch die an den Seiten der Kopfstütze entlanglaufenden Hohlprofile 9 verstärkt.

Um bei einem Aufprall die Energie aufzunehmen, ist die Kopfstütze 15 mit einem Kopfstützenkissen 17 ausgestattet. Das Kopfstützenkissen 17 ist vorzugsweise aus einem energieabsorbierenden Schaum gefertigt. Ein geeigneter Schaum ist zum Beispiel, wie bereits oben erwähnt, ein expandiertes Polypropylen (EPP). Wie auch das Rückenpolster 13 und das Sitzpolster 11, ist das Kopfstützenkissen 17 vorzugsweise mit einer lösbaren Verbindung mit der Kopfstütze 15 an der Sitzstruktur 3 verbunden, um auch das Kopfstützenkissen 17 auf einfache Weise austauschen zu können und so an die Ergonomie des Passagiers anpassen zu können. Als lösbare Verbindung für Sitzpolster 11, Rückenpolster 13 und Kopfstützenkissen 17 eignen sich zum Beispiel Druckknöpfe, Haken und Ösen, Knöpfe, Schrauben oder Nieten. Alternativ können das Sitzpolster 11, das Rückenpolster 13 und das Kopfstützenkissen 17 auch mit der Sitzstruktur 3 verklebt werden.

Das Material für das Rückenpolster 13 und das Sitzpolster 11 ist vorzugsweise ein Weichschaum. Geeignete Weichschäume sind zum Beispiel Polyurethanschäume.

In einer bevorzugten Ausführungsform sind im Weichschaum des Sitzpolsters 11 und des Rückenpolsters 13 Superabsorberpartikel aufgenommen. Die Superabsorberpartikel können Feuchtigkeit aufnehmen und so den Feuchtigkeitshaushalt des Passagiers beim Einsitzen regulieren. Es wird ein angenehmes Sitzgefühl erreicht. Zusätzlich ist im Bezug des Sitzpolsters 11 und des Rückenpolsters 13 vorzugsweise ein Phase-Change-Material enthalten, das zum Ausgleich des Wärmehaushaltes des Passagiers beiträgt. Hierdurch kann der Umfang der Klima- und Lüftungselemente im Fahrzeug reduziert werden.

Die Befestigung des Fahrzeugsitzes 1 im Kraftfahrzeug erfolgt mit Hilfe von Holmen 19, die an der Sitzstruktur 3 befestigt sind. Die Holme 19 können einerseits aus dem gleichen Kunststoff gefertigt sein wie die Sitzstruktur 3 und beim Spritzgussprozess der Sitzstruktur einstückig mit der Sitzstruktur 3 ausgebildet werden. Weiterhin ist es möglich, dass die Holme mit der Sitzstruktur 3 kraft- oder formschlüssig verbunden werden. In diesem Fall ist es möglich, dass die Holme 19 aus einem anderen Material gefertigt sind. So ist es dann zum Beispiel auch möglich, Holme 19 mit der Sitzstruktur 3 zu verbinden, die aus einem Metall gefertigt sind. Die Befestigung der Holme 19 an der Sitzstruktur 3 erfolgt dann zum Beispiel durch Verschrauben mit der Sitzstruktur 3.

Zur Montage des Fahrzeugsitzes 1 in einem Kraftfahrzeug werden die Holme 19 in eine in Figur 1 nicht dargestellte Bodenschiene, die mit dem Fahrzeugboden verbunden ist, eingeführt. Hierzu sind in der Bodenschiene Aufnahmen vorgesehen, deren Querschnitt dem Querschnitt der Holme 19 entspricht.

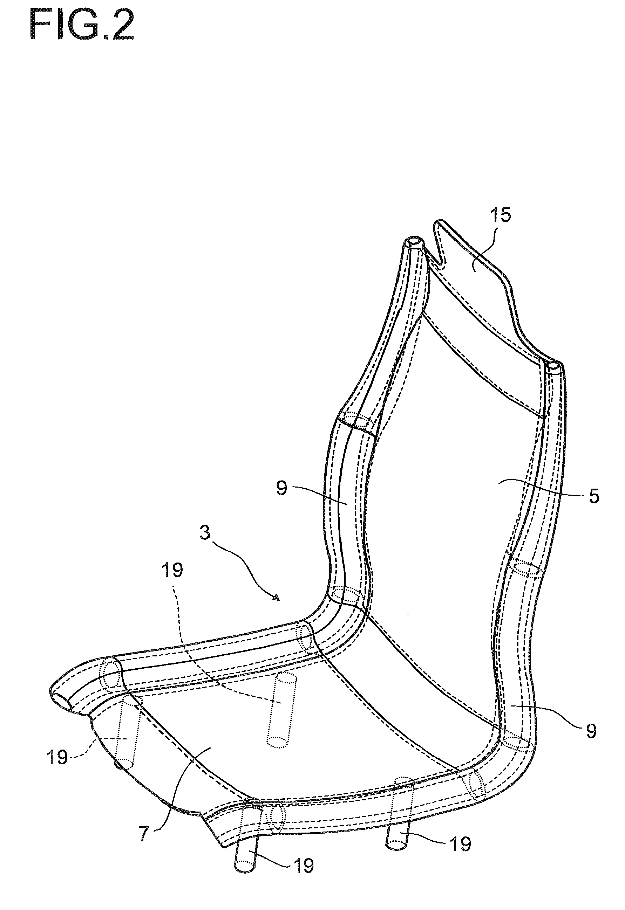

In Figur 2 ist eine erfindungsgemäß ausgebildete Sitzstruktur ohne Sitzpolster dargestellt.

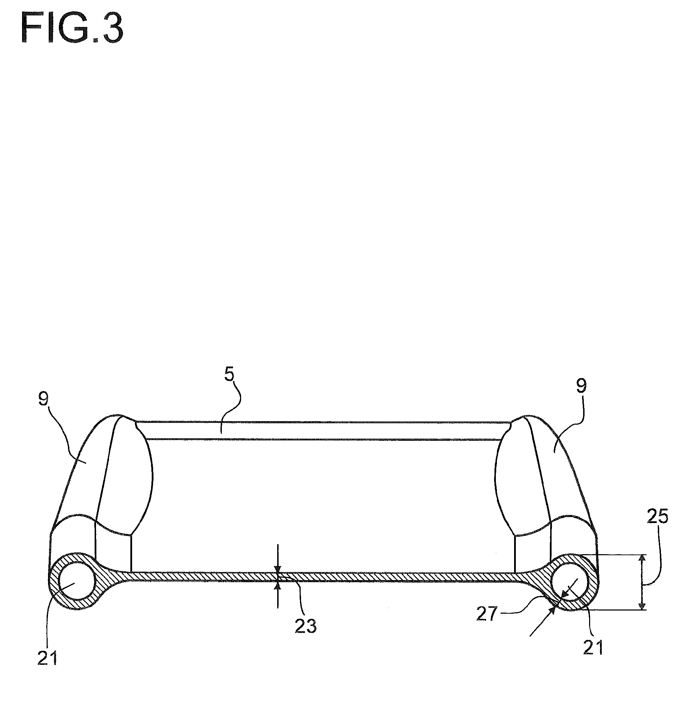

Die Sitzstruktur 2, die in Figur 2 dargestellt ist, wird in dieser Form dem Spritzgusswerkzeug zur Herstellung der Sitzstruktur 3 entnommen. Die Holme 19 sind dabei aus dem gleichen Material gefertigt wie die gesamte Sitzstruktur 3 und werden im Spritzgussprozess direkt an der Sitzstruktur 3 ausgeformt. Die Hohlprofile 9 an den Seiten von Rückenlehne 5 und Sitzfläche 7 werden, wie vorstehend beschrieben, durch Gasinnendrucktechnik und Wasserinjektionstechnik erzeugt. In der hier dargestellten Ausführungsform ergeben sich dabei Hohlprofile mit einem runden Querschnitt. Dieser ist der in Figur 3 dargestellten Schnittdarstellung der Rückenlehne 5 zu entnehmen. Durch die Gasinnendrucktechnik und Wasserinjektionstechnik wird die Kunststoffschmelze beim Spritzgussprozess an die Werkzeugwandung gepresst. Hierdurch entsteht ein Hohlraum 21. Dieser durchzieht das gesamte Hohlprofil 9. Durch die Kombination von Gasinnendrucktechnik und Wasserinjektionstechnik lässt sich ein Hohlprofil 9 erzeugen, welches eine gleichmäßige konstante Wandstärke aufweist. Die Rückenlehne 5, wie sie in Figur 3 dargestellt ist, weist vorzugsweise eine Wandstärke 23 auf, die im Bereich zwischen 1 und 10 mm, vorzugsweise im Bereich zwischen 2 und 4 mm liegt. Die in der hier dargestellten Ausführungsform mit rundem Querschnitt ausgebildeten Hohlprofile 9 haben vorzugsweise einen Außendurchmesser 25 im Bereich zwischen 30 und 80 mm und eine Wandstärke 27 im Bereich zwischen 3 und 10 mm.

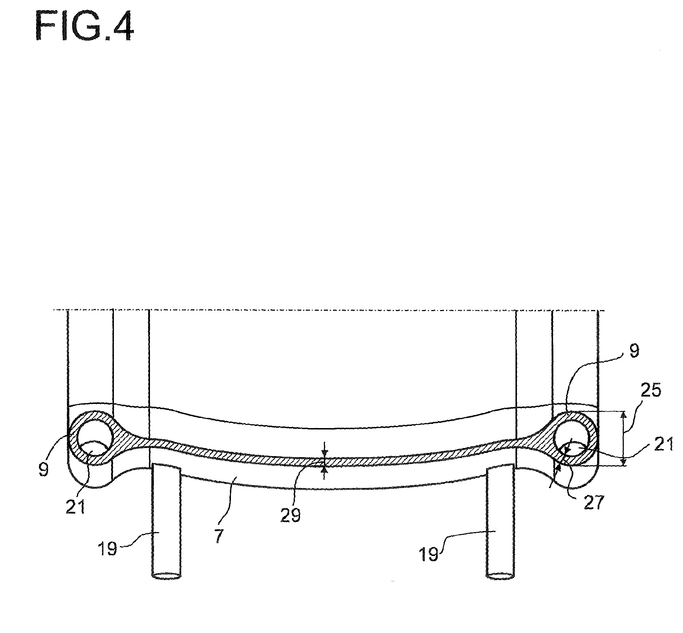

In Figur 4 ist ein Schnitt durch die Sitzfläche 7 eines erfindungsgemäß ausgebildeten Fahrzeugsitzes dargestellt. Die Sitzfläche 7 weist ebenso wie die Rückenlehne 5 vorzugsweise eine Wandstärke 29 im Bereich zwischen 1 und 10 mm, vorzugsweise im Bereich zwischen 2 und 4 mm, auf. Das an den Außenseiten der Sitzfläche 7 angeordnete Hohlprofil 9 hat, wie bei der Rückenlehne 3 auch, jeweils vorzugsweise einen Außendurchmesser 29 im Bereich zwischen 30 und 80 mm und eine Wandstärke 27 im Bereich zwischen 3 und 10 mm. Zur Befestigung des Fahrzeugsitzes im Kraftfahrzeug sind an der Unterseite der Sitzfläche 7 die Holme 19 angebracht.

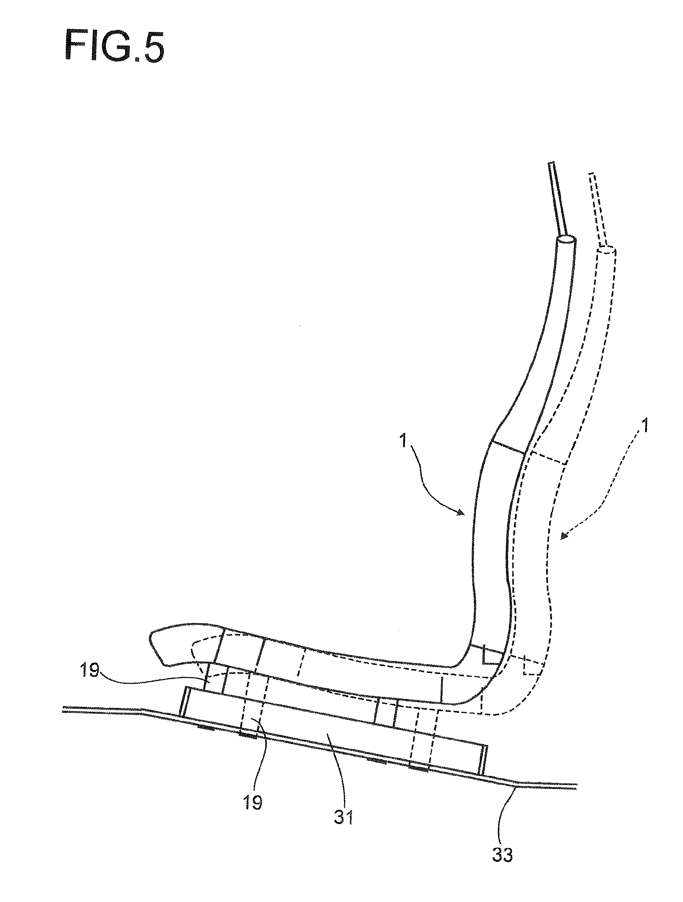

In Figur 5 ist ein erfindungsgemäß ausgebildeter Fahrzeugsitz in zwei unterschiedlichen Sitzpositionen zu entnehmen. Mit durchgezogenen Linien ist der Fahrzeugsitz 1 in einer ersten Position dargestellt. Mit gestrichelten Linien ist der Fahrzeugsitz 1 in einer zweiten Position dargestellt.

Zur Änderung des Abstandes sind in der Bodenschiene 31, die fest mit dem Fahrzeugboden 33 verbunden ist, Aufnahmen ausgebildet, in welche der Fahrzeugsitz 1 eingesteckt werden kann. Um die Längsposition des Fahrzeugsitzes 1 ändern zu können sind in den Bodenschienen 31 mehrere Aufnahmen für die Holme 19 hintereinander angeordnet. Auf diese Weise kann der Fahrzeugsitz 1 durch einfaches Entnehmen und Einstecken in benachbarte Aufnahmen für die Holme 19 versetzt werden. Um zu vermeiden, dass sich der Fahrzeugsitz 1 zum Beispiel aufgrund von Vibrationen während des Betriebs des Kraftfahrzeugs löst, ist der Fahrzeugsitz 1 vorzugsweise durch einen zusätzlichen Kraftschluss in den Aufnahmen für die Holme 19 gesichert. Die Aufnahmen für die Holme 19 in den Bodenschienen 31 haben vorzugsweise den gleichen Querschnitt wie die Holme 19. Auf diese Weise wird gewährleistet, dass sich der Fahrzeugsitz in den Aufnahmen 19 nicht bewegen kann, sondern fest positioniert ist.

### Bezugszeichenliste

- 1: Fahrzeugsitz
- 3: Sitzstruktur
- 5: Rückenlehne
- 7: Sitzfläche
- 9: Hohlprofil
- 11: Sitzpolster
- 13: Rückenpolster
- 15: Kopfstütze
- 17: Kopfstützenkissen
- 19: Holm
- 21: Hohlraum
- 23: Wandstärke der Rücklehne 5
- 25: Außendurchmesser des Hohlprofils 9
- 27: Wandstärke des Hohlprofils 9
- 29: Wandstärke der Sitzfläche 7
- 31: Bodenschiene
- 33: Fahrzeugboden

## Patentansprüche

1. Sitzstruktur für einen Fahrzeugsitz (1) aus einem Kunststoff, eine Rückenlehne (5) und eine Sitzfläche (7) umfassend, die einteilig miteinander verbunden sind, wobei bei der Sitzstruktur (3) entlang der Rückenlehne (5) und der Sitzfläche (7) mindestens ein Hohlprofil (9) ausgebildet ist, **dadurch gekennzeichnet, dass** das Hohlprofil (9) durch ein kombiniertes Gasinnendruck- und Wasserinjektionsverfahren hergestellt wird.

2. Sitzstruktur nach Anspruch 1, **dadurch gekennzeichnet, dass** an der Rückenlehne (5) eine Kopfstütze (15) ausgebildet ist.

3. Sitzstruktur nach Anspruch 1 oder 2, **dadurch gekennzeichnet, dass** an der Sitzstruktur (3) Befestigungsvorrichtungen vorgesehen sind, an denen jeweils ein Sitzpolster (11), ein Rückenpolster (13) und ein Kopfstützenkissen (17) befestigt werden können.

4. Sitzstruktur nach Anspruch 3, **dadurch gekennzeichnet, dass** die Sitzposition durch entsprechend geformte Sitzpolster (11), Rückenpolster (13) und Kopfstützenkissen (17) einstellbar ist.

5. Sitzstruktur nach einem der Ansprüche 1 bis 4, **dadurch gekennzeichnet, dass** an der Sitzfläche (7) Holme (19) vorgesehen sind, mit denen die Sitzstruktur (3) in eine Bodenschiene (31) eingesetzt werden kann.

6. Sitzstruktur nach Anspruch 5, **dadurch gekennzeichnet, dass** die Bodenschiene (31) mehrere Aufnahmen für die Holme (19) umfasst, so dass unterschiedliche Positionen der Sitzstruktur (3) in der Bodenschiene (31) eingestellt werden können.

7. Sitzstruktur nach einem der Ansprüche 1 bis 6, **dadurch gekennzeichnet, dass** das Hohlprofil (9) jeweils an der Seite der Sitzstruktur (3) entlang ausgebildet ist.

8. Sitzstruktur nach einem der Ansprüche 1 bis 7, **dadurch gekennzeichnet, dass** der Kunststoff ein Polyamid ist, das gegebenenfalls mit Glasfasern gefüllt ist.

9. Sitzstruktur nach einem der Ansprüche 4 bis 8, **dadurch gekennzeichnet, dass** das Sitzpolster (11) und das Rückenpolster (13) aus einem Weichschaum gefertigt sind.

10. Sitzstruktur nach einem der Ansprüche 4 bis 8, **dadurch gekennzeichnet, dass** Teile des Kopfstützenkissens (17) aus einem energieabsorbierenden Schaum gefertigt sind.

11. Sitzstruktur nach einem der Ansprüche 1 bis 10, **dadurch gekennzeichnet, dass** die Sitzstruktur (3) eine Wandstärke im Bereich von 1 bis 10 mm und das Hohlprofil (9) einen Außendurchmesser bzw. eine äußere Kantenlänge im Bereich von 10 bis 80 mm und eine Wandstärke im Bereich von 3 bis 10 mm aufweist.

12. Verfahren zur Herstellung einer Sitzstruktur (3) nach einem der Ansprüche 1 bis 11, folgende Schritte umfassend:
(a) Spritzgießen der Sitzstruktur (3) mit einer Kunststoffschmelze,
(b) Eindüsen eines Gases unter Druck zur Ausformung des Hohlprofils (9),
(c) Einspritzen einer Flüssigkeit unter Druck in das in Schritt (b) ausgeformte Hohlprofil (9).

13. Verfahren nach Anspruch 12, **dadurch gekennzeichnet, dass** die Flüssigkeit, die in Schritt (c) in das Hohlprofil (9) eingespritzt wird, Wasser ist.

14. Verwendung einer Sitzstruktur (3) nach einem der Ansprüche 1 bis 11 als Sitz in einem Kraftfahrzeug, insbesondere als Fahrersitz oder Beifahrersitz in einem Personenkraftwagen.
